(19) Europäisches Patentamt
European Patent Office
Office européen des brevets

(11) **EP 2 072 373 B1**

(12) **EUROPEAN PATENT SPECIFICATION**

(45) Date of publication and mention
of the grant of the patent:
**28.03.2012 Bulletin 2012/13**

(51) Int Cl.:
***B62D 5/04*** *(2006.01)*

(21) Application number: **08170192.2**

(22) Date of filing: **28.11.2008**

(54) **Friction plausibility detection for a steering system**

Reibungsplausibilitätsfeststellung für ein Lenksystem

Détection de plausibilité de friction pour un système de direction

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.12.2007 US 12552 P**
**22.10.2008 US 255853**

(43) Date of publication of application:
**24.06.2009 Bulletin 2009/26**

(73) Proprietor: **Ford Global Technologies, LLC**
**Dearborn, MI 48126 (US)**

(72) Inventors:
• **Brown, Andrew**
**Canton, MI 48187 (US)**
• **Recker, Darrel**
**Ypsilanti, MI 48197 (US)**
• **Hochrein, Brad**
**Dexter, MI 48130 (US)**
• **Bouse, William**
**Ann Arbor, MI 48108 (US)**

(74) Representative: **Harrison Goddard Foote**
**Delta House**
**50 West Nile Street**
**Glasgow**
**G1 2NP (GB)**

(56) References cited:
**DE-A1- 10 206 474    DE-A1-102006 017 775**

**Description**

The present invention relates to a steering system and more particularly to detecting and identifying high friction characteristics in a steering system.

High friction characteristics in a steering system are highly undesirable as they may adversely affect steering system performance. Large increases in friction may lead to degraded steering performance.

In an electric power steering system, there are mechanical and electrical components of hardware. In the event of a failure, it is preferable to have the electrical system fail, or shut-down, resulting in a loss of electric power assist before failure of the mechanical system. This at least maintains the physical integrity of the system, allowing an operator to safely steer a vehicle, even though it may be manual, i.e., without the power assist.

Under the presence of a corrosive liquid, the mechanical portions of a steering system may corrode quickly and lead to a large increase in steering friction, Due to high output torque assist capacity of a steering system, this increase in friction may go unnoticed by a normal driver due to the system powering through the increase in friction. In the event that the torque assist is lost, the vehicle will become difficult to steer, due to the combined effect of loss assist and high friction.

In an electric power system, there is no guarantee that once the mechanical system has corroded the electrical system will not terminate, quite possibly unexpectedly, at some point during a vehicle's journey. There is a need to identify high friction characteristics and alert a vehicle operator in an appropriately safe manner to have the steering system serviced to correct the high friction condition.

DE 10 2006 017775 describes a method of indentifying friction in a steering system.

According to a first aspect of the present invention there is provided a method in accordance with Claim 1. According to a second aspect of the present invention there is provided an apparatus in accordance with Claim 10.

The inventive subject matter is a method for detecting and identifying a high friction characteristic in a steering system according to the independent claims with variations as described in the dependent claims.

Embodiments of the present invention will now be described, by way of example only, with reference to the accompanying drawings in which:

FIGURE 1 is a block diagram representation of the friction plausibility detection algorithm of the inventive subject matter;

FIGURE 2 is a graph depicting a comparison of measured lateral acceleration and idealized lateral acceleration according to the inventive subject matter;

FIGURE 3 is a graph depicting a comparison of measured total steering force and idealized total steering force according to the inventive subject matter; and

FIGURE 4 is a block diagram of a confidence factor calculation according to the inventive subject matter.

Elements and steps in the figures are illustrated for simplicity and clarity and have not necessarily been rendered according to any particular sequence. For example, steps that may be performed concurrently or in different order are illustrated in the figures to help to improve understanding of embodiments of the present invention.

While various aspects of the present invention are described with reference to a particular illustrative embodiment, the invention is not limited to such embodiments, and additional modifications, applications, and embodiments may be implemented without departing from the present invention. In the figures, like reference numbers will be used to illustrate the same components. Those skilled in the art will recognize that the various components set forth herein may be altered without varying from the scope of the inventive subject matter.

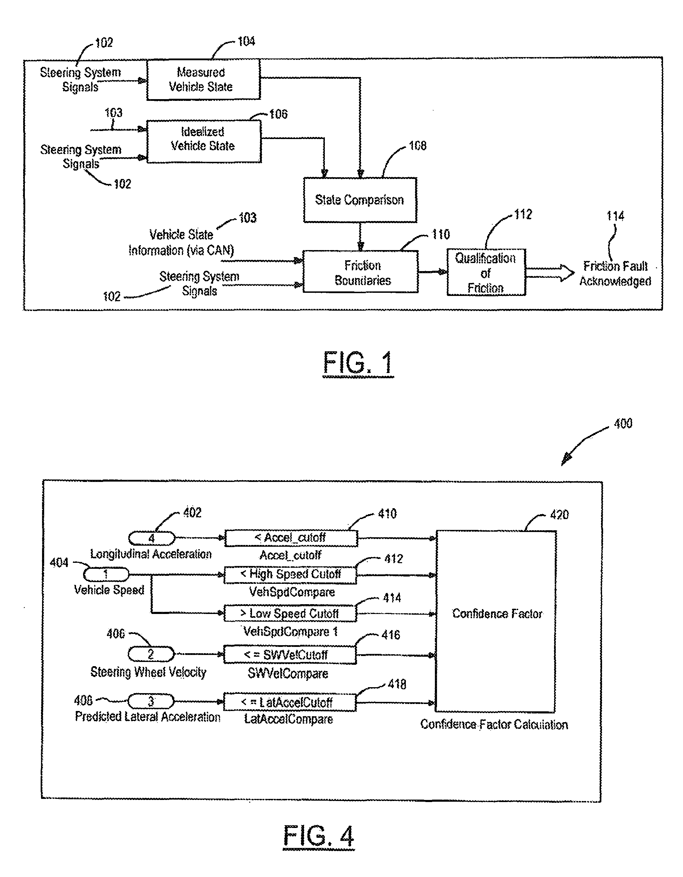

**FIG. 1** is a block diagram representation of a friction plausibility detection method, which may be implemented using an algorithm **100**. Steering system signals **102** are provided by sensors and signals from an Electric Power Steering (EPS) system. Additionally, external signals **103** from other electronic control modules, such as a Powertrain Control Module and a Brake Control Module, by way of a vehicle's central communication network, also called the CAN, are provided along with steering system signals **102** to determine idealized vehicle states **106.** Measured vehicle states **104** and idealized vehicle states **106** developed from vehicle parameters and various signals are compared **108** and the result is an estimate of friction in the steering system. Friction boundaries **110** are determined from the steering system signals and vehicle state information available from the CAN network on the vehicle. The friction boundaries may vary according to the vehicle's state and current operating conditions. The estimate of friction **108** is compared to the friction boundaries **110** and a qualification of friction determination **112** is made. If the comparison difference is outside of the friction boundaries, a friction fault is acknowledged **114**. Each step of the inventive subject matter will be described in greater detail hereinafter.

The measured vehicle states **104** are determined from direct measurement of signals **102** from the steering system. When used in calculations, the measured signals produce a measured vehicle state. The measured vehicle states **104** are considered an actual state of the steering system as the states are directly measuring the output of the steering system, regardless of the friction that may be within the steering system. Any signals available to the EPS may be used to measure the vehicle state. For example, a combination of any of the following signals may be readily available internally from the steering system: Input Torque, Assist Torque, Pinion Angle, Rack Travel, Steering System Gear Ratios, System Temperature, System Performance, and algorithms that run within the steering system.

Specifically, an example of a measured state for an EPS system that may be used in the inventive subject matter is described hereinafter. A rack load signal, $R_{load}$, representative of a total steering force, may be developed using known rack parameters according to the equation:

$$R_{load} = (Assist_{Tq} + Input_{Tq}) \cdot (1/PinionRatio) \qquad (1)$$

Where, $Assist_{Tq}$ is an assist torque output of the steering system in Nm, $Input_{Tq}$ is an input torque from a vehicle operator in Nm, and $PinionRatio$, is the rack and pinion ratio in meters (m). The result is a measured rack load, or total steering force, that the system is producing at a current vehicle state for the EPS system

The idealized vehicle state **106** is determined from external signals **103** from the vehicle CAN and predetermined signals **102** from the steering system to predict a given idealized vehicle state, or a value for what the vehicle state should be assuming the presence of a nominal level of friction in the system. The predetermined signals from the steering system may be the same as those described with the measured vehicle state. However, the idealized vehicle state **106** also uses external signals **103**, in addition to the measured vehicle state, to determine an idealized state value. The external signals **103** may be received from the vehicle CAN and may include, but are not limited to: Brake Control Module System (lateral acceleration, yaw rate, longitudinal acceleration, etc.), Powertrain Information (engine speed, engine torque, vehicle speed, etc.), Wheel Speeds, ABS and other safety systems, Vehicle temperatures, and System temperatures.

Using the signals and an appropriate governing engineering equation in conjunction with predetermined tunable parameters, a desired vehicle state can be calculated. In order to assure that the idealized value is accurate for the vehicle state, a confidence factor for the idealized state is created and applied as part of the idealized vehicle state calculation **108**. The confidence factor is developed from the outside signals from the CAN and the steering system in order to "verify" (provide more or less confidence to the vehicle state) the idealized vehicle state value for predetermined vehicle conditions. The confidence factor will be described later herein.

An example of the prediction of the vehicle state Rack Load is provided by the Equation:

$$R_{Load} = LoadGain \cdot ay \qquad (2)$$

Where $LoadGain$ is an experimentally determined coefficient to convert lateral acceleration to rack load, ay is the vehicle's lateral acceleration in m/s$^2$ as determined by the Equation:

$$ay = (u^2/(Ku^2 + L)) \cdot \delta_f \qquad (3)$$

Where $u$ is vehicle velocity in m/s, $K$ is an understeer coefficient in 1/(m/s$^2$), $L$ is wheelbase in m, and $\delta_f$ is front road wheel angle in radians given by:

$$\delta_f = SWA \cdot G \cdot (\pi/180°) \qquad (4)$$

Where $SWA$ is a steering wheel angle in degrees and $G$ is an overall steering ratio.

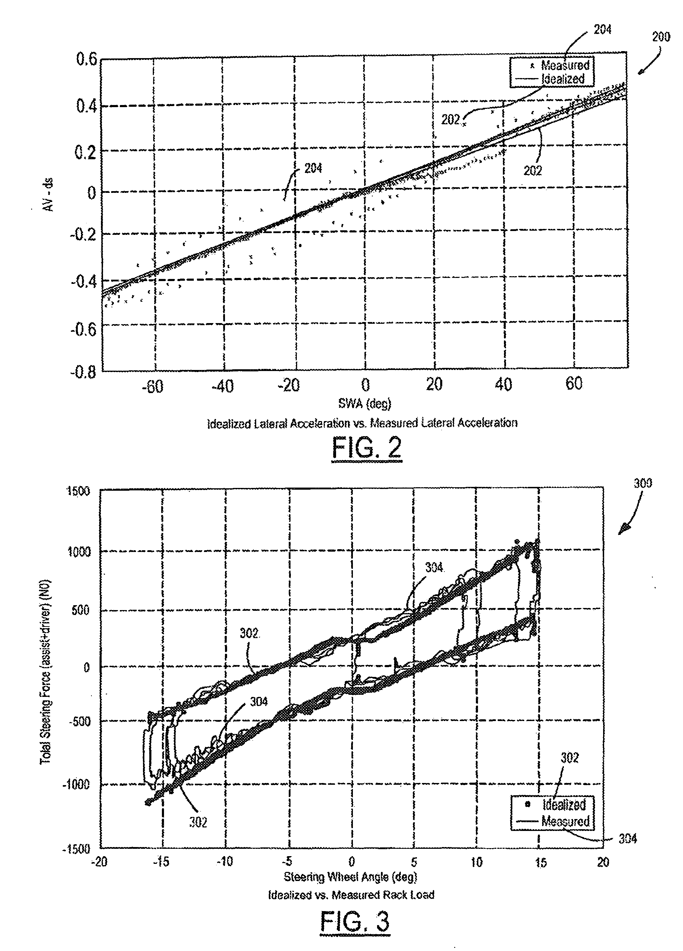

The vehicle state comparison is made mathematically and the result is a difference between the measured and idealized vehicle states. **FIG. 2** is a graphical representation of an idealized lateral acceleration and a measured lateral acceleration **200** of the inventive subject matter. The graph clearly shows the idealized lateral acceleration **202** as compared to actual measured lateral acceleration **204**. Lateral acceleration being one example of a vehicle state that is applicable to the inventive subject matter. Another example is provided in **FIG. 3**. **FIG. 3** is a graphical representation of rack load **300**. The idealized rack load **302** is compared to the measured rack load **304** for multiple steering wheel angle positions. It can be seen in the comparison figures where the predictions closely approximate the actual measured states. For example, in **FIG. 2**, for low lateral acceleration and quasi steady-state vehicle longitudinal accelerations, the idealized values are very good.

**FIG. 4** is a block diagram describing the confidence factor that is applied to the idealized vehicle states discussed above. Prior to the comparison of the idealized and measured states, the inventive subject matter includes determination of a confidence factor, to ensure the idealized vehicle state is a valid value. The confidence factor is used to identify periods when the vehicle is in a stable condition allowing for confidence that the idealized value of the vehicle state will be good, or useful data. For example, the confidence factor should be used to decide when the vehicle meets stable criteria, ensuring that the calculations for the idealized value are valuable to application of the inventive subject matter. The confidence factor calculation **400** uses vehicle measurements, such as longitudinal acceleration **402**, vehicle speed **404**, steering wheel velocity **406**, and the idealized value **408**, such as lateral acceleration, as inputs. The inputs are compared to threshold values. For example, the longitudinal acceleration **402** is compared to an acceleration cutoff value **410** and if the threshold is exceeded, the confidence factor is affected. Likewise, vehicle speed may be compared to high **412** and low **414** threshold values; steering wheel velocity **406** is compared to a steering wheel velocity threshold **416**; and the idealized value **408** is compared to an applicable threshold **418**, i.e., lateral acceleration threshold. Vehicle diagnostics, i.e., fault-free systems, temperature limits, the state of the vehicle electronic control unit, and or other potential vehicle failures may also be taken into consideration when determining the confidence factor. The basic premise is to determine when to apply the comparison so as to ensure valid results for the inventive subject matter. In current vehicle states which indicate unstable driving conditions, the inventive subject matter may not be applied and will be applied at a later time when vehicle stability has resumed. In another example, a fault signal or indication of a sensor failure that would normally provide signal information useful to the inventive subject matter would preclude application of the inventive subject matter so as to avoid incorrect information being used in the idealized vehicle state estimation.

The confidence factor **420** is calculated based on the threshold comparisons and will weigh on the significance of the idealized value as it is used in the system and method of the inventive subject matter. For example, a low confidence factor, i.e., a value much less than one, will result in an idealized value that is not afforded much weight in the determination of friction according to the inventive subject matter. On the other hand, a high confidence factor, i.e., a factor very close to one, will result in a valuable idealized value.

Referring again to **FIG. 1**, once the idealized and measured states have been calculated, and the confidence factor for the idealized value has been met for a current vehicle state, the idealized and measured states are compared **108**. The comparison may be accomplished in a mathematical manner, of which, the methods that may be used are too numerous to mention herein. One skilled in the art is capable of choosing the most applicable mathematical method to employ in developing the algorithm. The general concept is to compare the two values in a way that identifies substantial differences between them. Substantial differences are defined to be differences that can be distinguished from transient, temporary differences. The result is a value that is taken to be an estimate of friction present in the steering system.

An example of such a mathematical comparison may include filtering the measured and idealized values to isolate the frequency content of interest. Typically, the low frequency content is of interest. Filtering is performed to allow consideration of overall level changes between the two signals, ignoring the high frequency changes that occur in the signals. After filtering, an absolute difference between the two signals may be taken.

The estimate of friction will then be subjected to friction boundaries **110** to determine how much friction may be present in the system. For example, if the estimate of friction is greater than a predetermined friction boundary, then high friction may be present in the system. The friction boundaries **110** may be calculated from vehicle state conditions **102**, **103** and limits that are tunable. For example, a friction boundary may be calculated according to vehicle speed to allow for a lower friction boundary at low speeds and a higher friction boundary at high speeds. The boundaries are also vehicle dependent, time dependent, and may have a variety of factors taken into consideration in their values.

According to an embodiment of the inventive subject matter, the duration of the existence of the estimate of friction is determined so as to qualify **112** the friction prediction. A predetermined time limit for an estimate of friction that exceeds the friction boundary is used to compare the duration of the existence of the estimate of friction. In the event the estimate of friction exceeds the friction boundary for a time that exceeds the predetermined time limit, the qualification of the friction detection is verified. In such event, a friction-acknowledge bit may be set **114**, which may result in a fault signal being initiated by the vehicle. One skilled in the art is capable of applying any one of several methods for using the friction-acknowledge bit to notify an operator and/or a vehicle system that high friction has been detected. The scope of which is dependent upon the type of failure that may occur on which the vehicle and the type of steering system on the vehicle all factor into the desired method of notification.

In the foregoing specification, the invention has been described with reference to specific exemplary embodiments. Various modifications and changes may be made, however, without departing from the scope of the present invention as set forth in the claims. The specification and figures are illustrative, rather than restrictive, and modifications are intended to be included within the scope of the present invention. Accordingly, the scope of the invention should be determined by the claims and their legal equivalents rather than by merely the examples described.

For example, the steps recited in any method or process claims may be executed in any order and are not limited to the specific order presented in the claims. The equations may be implemented with a filter to minimize effects of signal noises.

The terms "comprise", "comprises", "comprising", "heaving", "including", "includes" or any variation thereof, are intended to reference a non-exclusive inclusion, such that a process, method, article, composition or apparatus that comprises a list of elements does not include only those elements recited, but may also include other elements not expressly listed or inherent to such process, method, article, composition or apparatus.

**Claims**

1. A method of detecting and identifying friction in an electric power steering system for a vehicle, the method comprising the steps of:

   measuring predetermined vehicle states (104);
   calculating idealized vehicle states (106) using predetermined steering system signals (102) and signals (103) external to the steering system in predetermined state equations;
   comparing the measured predetermined vehicle states to the idealized vehicle states (106) to isolate signal data of interest and define an estimate of friction (108) that is present in the steering system;
   applying friction boundaries (110) to the estimate of friction (108) present in steering system; and
   acknowledging the presence of high friction in the event the estimate of friction (108) exceeds the friction boundaries (110), **characterized in that**
   the step of calculating idealized vehicle states (106) using predetermined steering system signals (102) and signals (103) external to the steering system in predetermined state equations further comprises the step of calculating confidence factor for the idealized vehicle states (106) for a current vehicle state.

2. The method as claimed in claim 1 wherein the step of calculating a confidence factor further comprises the steps of:

   identifying current vehicle states (104);
   comparing identified current vehicle states (104) to threshold values;
   establishing a confidence factor; and
   applying the confidence factor to the idealized vehicle states (106) thereby defining a value to the validity of the idealized vehicle states (106).

3. The method as claimed in claim 2 wherein the step of identifying current vehicle states (104) further comprises identifying vehicle states from the group consisting of; longitudinal acceleration (402), vehicle speed (404), steering wheel velocity (406), and the idealized vehicle state (106).

4. The method as claimed in claim 2 or 3 wherein the step of comparing identified current vehicle (104) states to threshold values further comprises the step of considering vehicle diagnostics including any fault or failure indications that may be present in a control system for the vehicle.

5. The method as claimed in any preceding claim wherein the step of comparing the measured predetermined vehicle states (104) to the idealized vehicle states (106) further comprises applying a mathematical operation to the measured and idealized vehicle states to identify substantial differences thereby defining the estimate of friction (108).

6. The method as claimed in any preceding claim wherein the step of applying friction boundaries (110) to the estimate of friction (108) further comprises the step of calculating the friction boundaries (110) based on current vehicle states (104).

7. The method as claimed in any preceding claim wherein the step of applying friction boundaries (110) to the estimate of friction (108) further comprises the step of qualifying the estimate of friction (108).

8. The method as claimed in claim 7 wherein the step of qualifying the estimate of friction (108) further comprises the steps of:

determining a duration of time that the existence of the estimate of friction (108) has exceeded a friction boundary (110); and

defining a time threshold value whereby the estimate of friction (108) is deemed valid upon determination that the determined duration of time exceeds the time threshold value.

**9.** The method as claimed in any preceding claim wherein the step of measuring predetermined vehicle states (104) further comprises the step of calculating at least one predetermined vehicle state (104) from a plurality of signals (102) available from the electronic power steering system.

**10.** An apparatus adapted to detect friction plausibility in a vehicle having an electric power steering system providing steering system signals (102), the apparatus comprising:

a central communication control network providing signals representative of a plurality of vehicle states (104); and a controller for measuring vehicle states (104), calculating idealized vehicle states (106) using predetermined steering system signals (102) and signals (103) external to the steering system in predetermined state equations, comparing the measured predetermined vehicle states (104) to the idealized vehicle states (106) to isolate signal data of interest and define an estimate of friction (108) present in the steering system, applying friction boundaries (110) to the estimate of friction (108) present in the steering system, and acknowledging the presence of high friction in the event the estimate of friction (108) exceeds friction threshold boundaries (110) for a predetermined time threshold,

**characterized in that** the controller is adapted to calculate a confidence factor for the idealized vehicle state (106) for a current vehicle state (104).

**11.** The apparatus as claimed in claim 10 wherein the steering system signals (102) are used in calculations by the controller for measuring vehicle states.

**12.** The apparatus as claimed in claim 10 or 11 wherein the confidence factor calculation further comprises:

identifying current vehicle states (104),

comparing indentified current vehicle states (104) to predetermined threshold values;

establishing a confidence factor; and

applying the confidence factor to the idealized vehicle state (106) thereby defining a value to the validity of the idealized vehicle state (106).

**13.** The apparatus as claimed in any of claims 10 to 12 wherein the controller compares the measured predetermined vehicle states (104) to the idealized vehicle states (106) by applying a mathematical operation to the measured and idealized states to identify differences thereby defining the estimate of friction (108).

**14.** The apparatus has claimed in any of claim 10 to 13 wherein the controller qualities the estimate of friction (108) by determining a duration of time the estimate of friction (108) exceeds a friction boundary (110) and defining a time threshold value for the duration of time the estimate of friction (108) exceeds the friction boundary (110), whereby the estimate of friction (108) is deemed valid upon determination of the duration of time the estimate of friction (108) exceeds the fiction boundary (110) exceeds the time threshold value.

**Patentansprüche**

**1.** Verfahren zum Detektieren und Identifizieren von Reibung in einem elektrischen Servolenksystem für ein Fahrzeug, wobei das Verfahren die folgenden Schritte umfasst:

das Messen vorbestimmter Fahrzeugzustände (104);

das Berechnen idealisierter Fahrzeugzustände (106) unter Verwendung vorbestimmter Lenksystemsignale (102) und von Signalen (103) außerhalb des Lenksystems in vorbestimmten Zustandsgleichungen;

das Vergleichen der gemessenen vorbestimmten Fahrzeugzustände mit den idealisierten Fahrzeugzuständen (1069, um relevante Signaldaten zu isolieren und einen Reibungsschätzwert (108) zu definieren, der in dem Lenksystem vorhanden ist;

das Anwenden von Reibungsgrenzwerten (110) auf den Reibungsschätzwert (108), der in dem Lenksystem vorhanden ist; und

das Bestätigen des Vorhandenseins hoher Reibung für den Fall, dass der Reibungsschätzwert (108) die Reibungsgrenzwerte (110) überschreitet; **dadurch gekennzeichnet, dass**:

der Schritt des Berechnens idealisierter Fahrzeugzustände (106) unter Verwendung vorbestimmter Lenksystemsignale (102) und von Signalen (103) außerhalb des Lenksystems in vorbestimmten Zustandsgleichungen ferner den Schritt des Berechnens eines Konfidenzfaktors für die idealisierten Fahrzeugzustände (106) für einen aktuellen Fahrzeugzustand umfasst.

2. Verfahren nach Anspruch 1, wobei der Schritt des Berechnens eines Konfidenzfaktors ferner die folgenden Schritte umfasst:

das Identifizieren aktueller Fahrzeugzustände (104);
das Vergleichen der identifizierten aktuellen Fahrzeugzustände (104) mit Grenzwerten;
das Bestimmen eines Konfidenzfaktors; und
das Anwenden des Konfidenzfaktors auf die idealisierten Fahrzeugzustände (106), wodurch ein Wert für die Validität der idealisierten Fahrzeugzustände (106) definiert wird.

3. Verfahren nach Anspruch 2, wobei der Schritt des Identifizierens aktueller Fahrzeugzustände (104) ferner das Identifizieren von Fahrzeugzuständen aus der Gruppe umfasst, die folgendes umfasst: die Längsbeschleunigung (402), die Fahrzeuggeschwindigkeit (404), die Lenkradgeschwindigkeit (406) und den idealisierten Fahrzeugzustand (106).

4. Verfahren nach Anspruch 2 oder 3, wobei der Schritt des Vergleichens identifizierter aktuelle Fahrzeugzustände (104) mit den Grenzwerten ferner den Schritt des Berücksichtigens von Fahrzeugdiagnostik umfasst, einschließlich aller Fehler- oder Ausfallmeldungen, die in einem Steuerungssystem für das Fahrzeug vorhanden sind.

5. Verfahren nach einem der vorstehenden Ansprüche, wobei der Schritt des Vergleichens der gemessenen vorbestimmten Fahrzeugzustände (104) mit den idealisierten Zuständen (106) ferner das Anwenden einer mathematischen Operation auf die gemessenen und idealisierten Fahrzeugzustände umfasst, um wesentliche Unterschiede zu identifizieren, wodurch der Reibungsschätzwert (108) definiert wird.

6. Verfahren nach einem der vorstehenden Ansprüche, wobei der Schritt des Anwendens von Reibungsgrenzwerten (110) auf den Reibungsschätzwert (108) ferner den Schritt des Berechnens der Reibungsgrenzwerte (110) auf der Basis der aktuellen Fahrzeugzustände (104) umfasst.

7. Verfahren nach einem der vorstehenden Ansprüche, wobei der Schritt des Anwendens von Reibungsgrenzwerten (110) auf den Reibungsschätzwert (108) ferner den Schritt des Qualifizierens des Reibungsschätzwerts (108) umfasst.

8. Verfahren nach Anspruch 7, wobei der Schritt des Qualifizierens des Reibungsschätzwerts (108) ferner die folgenden Schritte umfasst:

das Bestimmen einer Zeitdauer, über welche die Existenz des Reibungsschätzwerts (108) einen Reibungsgrenzwert (110) überschritten hat; und
das Definieren eines Zeitgrenzwerts, wodurch der Reibungsschätzwert (108) für gültig befunden wird nach der Bestimmung, dass die bestimmte Zeitdauer den Zeitgrenzwert überschreitet.

9. Verfahren nach einem der vorstehenden Ansprüche, wobei der Schritt des Messens vorbestimmter Fahrzeugzustände (104) ferner den Schritt des Berechnens mindestens eines vorbestimmten Fahrzeugzustands (104) aus einer Mehrzahl von Signalen (102) umfasst, die für das elektronische Servolenksystem zur Verfügung stehen.

10. Vorrichtung, die eine Reibungsplausibilität in einem Fahrzeug mit einem elektrischen Servolenksystem detektieren kann, das Lenksystemsignale (102) bereitstellt, wobei die Vorrichtung folgendes umfasst:

ein zentrales Kommunikationssteuernetzwerk, das Signale bereitstellt, welche eine Mehrzahl von Fahrzeugzuständen (104) darstellen; und
eine Steuereinheit für die gemessenen Fahrzeugzustände (104), das Berechnen idealisierter Fahrzeugzustände (106) unter Verwendung vorbestimmter Lenksystemsignale (102) und von Signalen (103) außerhalb des Lenksystems in vorbestimmten Zustandsgleichungen, das Vergleichen der gemessenen vorbestimmten Fahrzeugzustände (104) mit den idealisierten Fahrzeugzuständen (106), um relevante Signaldaten zu isolieren und einen Reibungsschätzwert (108) zu definieren, der in dem Lenksystem vorhanden ist, das Anwenden von Reibungsgrenzwerten (110) auf den Reibungsschätzwert (108), der in dem Lenksystem vorhanden ist, und das Bestätigen des Vorhandenseins hoher Reibung für den Fall, dass der Reibungsschätzwert (108) Reibungsgrenzwerte (110) für einen bestimmten Zeitgrenzwert überschreitet;

**dadurch gekennzeichnet, dass** die Steuereinheit einen Konfidenzfaktor für den idealisierten Fahrzeugzustand (106) für einen aktuellen Fahrzeugzustand (104) berechnen kann.

11. Vorrichtung nach Anspruch 10, wobei die Lenksystemsignale (102) bei Berechnungen durch die Steuereinheit zum Messen von Fahrzeugzuständen eingesetzt werden.

12. Vorrichtung nach Anspruch 10 oder 11, wobei die Konfidenzfaktorberechnung ferner folgendes umfasst:

das Identifizieren aktueller Fahrzeugzustände (104);
das Vergleichen der identifizierten Fahrzeugzustände (104) mit vorbestimmten Grenzwerten;
das Bestimmen eines Konfidenzfaktors; und
das Anwenden des Konfidenzfaktors auf den idealisierten Fahrzeugzustand (106), wodurch ein Wert für die Validität des idealisierten Fahrzeugzustands (106) definiert wird.

13. Vorrichtung nach einem der Ansprüche 10 bis 12, wobei die Steuereinheit die gemessenen vorbestimmten Fahrzeugzustände (104) mit den idealisierten Fahrzeugzuständen (106) vergleicht, indem eine mathematische Operation auf die gemessenen und idealisierten Zustände angewendet wird, um Differenzen zu identifizieren, wodurch der Reibungsschätzwert definiert wird.

14. Vorrichtung nach einem der Ansprüche 10 bis 13, wobei die Steuereinheit den Reibungsschätzwert (108) qualifiziert, indem eine Zeitdauer bestimmt wird, über welche der Reibungsschätzwert (108) einen Reibungsgrenzwert (110) überschreitet, und wobei ein Zeitgrenzwert für die Zeitdauer definiert wird, über welche der Reibungsschätzwert (108) den Reibungsgrenzwert (110) überschreitet, wodurch der Reibungsschätzwert (108) für gültig befunden wird, nachdem bestimmt worden ist, dass die Zeitdauer des Reibungsschätzwerts (108) den Reibungsgrenzwert (110) überschreitet, welcher den Zeitgrenzwert überschreitet.

**Revendications**

1. Procédé de détection et d'identification de friction dans un système de direction assistée électrique pour un véhicule, le procédé comprenant les étapes consistant à :

mesurer des états de véhicule prédéterminés (104) ;
calculer des états de véhicule idéalisés (106) en utilisant des signaux de système de direction prédéterminés (102) et des signaux (103) externes au système de direction dans des équations d'état prédéterminées ;
comparer les états de véhicule prédéterminés mesurés aux états de véhicule idéalisés (106) pour isoler des données de signal présentant un intérêt et définir une estimation de la friction (108) qui est présente dans le système de direction ;
appliquer des limites de friction (110) à l'estimation de la friction (108) présente dans le système de direction ; et reconnaître la présence de friction élevée si l'estimation de la friction (108) dépasse les limites de friction (110), **caractérisé en ce que**
le calcul des états de véhicule idéalisés (106) en utilisant des signaux de système de direction prédéterminés (102) et des signaux (103) externes au système de direction dans des équations d'état prédéterminées comprend en outre l'étape consistant à calculer un facteur de confiance pour les états de véhicule idéalisés (106) pour un état de véhicule actuel.

2. Procédé selon la revendication 1, dans lequel le calcul d'un facteur de confiance comprend en outre les étapes consistant à :

identifier les états de véhicule actuels (104) ;
comparer les états de véhicule actuels identifiés (104) à des valeurs seuil ;
établir un facteur de confiance ; et

appliquer le facteur de confiance aux états de véhicule idéalisés (106), définissant ainsi une valeur à la validité des états de véhicule idéalisés (106).

3. Procédé selon la revendication 2, dans lequel l'identification des états de véhicule actuels (104) comprend en outre l'étape consistant à identifier des états de véhicule dans le groupe constitué par: accélération longitudinale (402), vitesse de véhicule (404), vitesse du volant (406) et état de véhicule idéalisé (106).

4. Procédé selon la revendication 2 ou 3, dans lequel la comparaison des états de véhicule actuels identifiés (104) à des valeurs seuils comprend en outre l'étape consistant à prendre en compte le diagnostic du véhicule y compris toute indication de défaut ou de défaillance pouvant être présente dans un système de commande pour le véhicule.

5. Procédé selon l'une quelconque des revendications précédentes, dans lequel la comparaison des états de véhicule prédéterminés mesurés (104) aux états de véhicule idéalisés (106) comprend en outre l'étape consistant à appliquer une opération mathématique aux états de véhicule mesurés et idéalisés pour identifier des différences substantielles, définissant ainsi l'estimation de la friction (108).

6. Procédé selon l'une quelconque des revendications précédentes, dans lequel l'application de limites de friction (110) à l'estimation de la friction (108) comprend en outre l'étape consistant à calculer les limites de friction (110) sur la base des états de véhicule actuels (104).

7. Procédé selon l'une quelconque des revendications précédentes, dans lequel l'application de limites de friction (110) à l'estimation de la friction (108) comprend en outre l'étape consistant à qualifier l'estimation de la friction (108).

8. Procédé selon la revendication 7, dans lequel la qualification de l'estimation de la friction (108) comprend en outre les étapes consistant à :

déterminer une durée de temps pendant laquelle l'estimation de la friction (108) a dépassé une limite de friction (110) ; et
définir une valeur seuil de temps moyennant quoi l'estimation de la friction (108) est considérée comme valable après avoir déterminé que la durée de temps déterminée dépasse la valeur seuil de temps.

9. Procédé selon l'une quelconque des revendications précédentes, dans lequel la mesure des états de véhicule prédéterminés (104) comprend en outre l'étape consistant à calculer au moins un état de véhicule prédéterminé (104) à partir d'une pluralité de signaux (102) disponibles à partir du système de direction assistée électronique.

10. Appareil adapté pour détecter la plausibilité de friction dans un véhicule ayant un système de direction assistée électrique fournissant des signaux de système de direction (102), l'appareil comprenant :

un réseau de commande de communication central fournissant des signaux représentatifs d'une pluralité d'états de véhicule (104) ; et
un dispositif de commande pour mesurer des états de véhicule (104), calculer des états de véhicule idéalisés (106) en utilisant des signaux de système de direction prédéterminés (102) et des signaux (103) externes au système de direction dans des équations d'état prédéterminées, comparer les états de véhicule prédéterminés mesurés (104) aux états de véhicule idéalisés (106) pour isoler des données de signal présentant un intérêt et définir une estimation de la friction (108) présente dans le système de direction, appliquer des limites de friction (110) à l'estimation de la friction (108) présente dans le système de direction, et reconnaître la présence de friction élevée si l'estimation de la friction (108) dépasse des limites seuils de friction (110) pendant un seuil de temps prédéterminé,
**caractérisé en ce que** le dispositif de commande est adapté pour calculer un facteur de confiance pour l'état de véhicule idéalisé (106) pour un état de véhicule actuel (104).

11. Appareil selon la revendication 10, dans lequel les signaux du système de direction (102) sont utilisés dans les calculs par le dispositif de commande pour mesurer les états de véhicule.

12. Appareil selon la revendication 10 ou 11, dans lequel le calcul du facteur de confiance comprend en outre :

identifier les états de véhicule actuels (104) ;
comparer les états de véhicule actuels identifiés (104) à des valeurs seuil prédéterminées ;

établir un facteur de confiance ; et

appliquer le facteur de confiance aux états de véhicule idéalisés (106), définissant ainsi une valeur à la validité des états de véhicule idéalisés (106).

**13.** Appareil selon l'une quelconque des revendications 10 à 12, dans lequel le dispositif de commande compare les états de véhicule prédéterminés mesurés (104) aux états de véhicule idéalisés (106) en appliquant une opération mathématique aux états de véhicule mesurés et idéalisés pour identifier des différences, définissant ainsi l'estimation de la friction (108).

**14.** Appareil selon l'une quelconque des revendications 10 à 13, dans lequel le dispositif de commande qualifie l'estimation de la friction (108) en déterminant une durée de temps pendant laquelle l'estimation de la friction (108) dépasse une limite de friction (110) et en définissant une valeur seuil de temps pour la durée de temps pendant laquelle l'estimation de la friction (108) dépasse la limite de friction (110) moyennant quoi l'estimation de la friction (108) est considérée comme valable lorsqu'il est déterminé que la durée de temps pendant laquelle l'estimation de la friction (108) dépasse la limite de friction (110) dépasse la valeur seuil de temps.

FIG. 1

FIG. 4

Idealized Lateral Acceleration vs. Measured Lateral Acceleration

## FIG. 2

Idealized vs. Measured Rack Load

## FIG. 3

## REFERENCES CITED IN THE DESCRIPTION

**Patent documents cited in the description**

- DE 102006017775